# EUROPEAN PATENT APPLICATION

(11) **EP 3 766 788 A1**
(43) Date of publication of application: **20.01.2021**
(21) Application number: 19382606.2
(22) Date of filing: 17.07.2019
(51) Int. Cl.: B64F 1/36, B64F 1/305

(54) **A DEVICE ADAPTED TO PROVIDE A FLUID OR ENERGY TO AN AIRCRAFT**

(71) Applicant: thyssenkrupp Airport Solutions, S.A., 33682 Mieres (Asturias) (ES)
(72) Inventor: Perez Vazquez, Eduardo, 33206 Gijón, Asturias (ES)
(74) Representative: Jacobi, Nicolas

(57) **Abstract**

A device (10) adapted to provide a fluid or energy to an aircraft (1), comprising
a storage (11),
a duct (14) at least partially accommodated at said storage (11), the duct (14) having a first end (15) to be attached to the aircraft (1),
a drive (18) adapted for extracting the duct (14) from the storage (11) and retracting the duct (14) to the storage (11),
a control unit (19) for controlling the functionality of the drive (18),
**characterized in**
that the control unit (19) is adapted to control the functionality of the device automatically in dependency of the actual docking event.

## Description

The invention refers to a device for providing fluid, in particular conditioned air, or energy, in particular electric energy, to an aircraft, when the aircraft is located at an airport stand. The device is installed at the airport stand. In some embodiments the device is part of a passenger boarding bridge.

Devices of the generic type are described in WO 2014 108590 A2, US 2002/0195156 A1 and US 2009 / 0197516 A1.

It is the object of the present invention to improve the ergonomics of such a device.

This object is solved by a device according to claim 1; preferred embodiments are subject of the subclaims and the description.

The main idea is to provide some of the functionalities in dependency of the docking event.

The docking even it is in particular characterized by the type of aircraft which is located at the stand. In particular the device is then used to establish a connection between a stationary supplier, in particular a supplier of air or a supplier of energy. Establishing a dependency between the docking situation and the functionality can increase the ergonomics and efficiency of the device.

In an embodiment the docking event is characterized by a certain height parameter. The height parameter may be the height of the door of the aircraft to which the device may be attached. Based on said height the height of the device may dependent. So in case the height is very high it may be difficult for the user to reach the device.

In an embodiment that during a preparation situation the duct is extracted into a preparation length. The preparation length is dependent from the docking event. In particular during the preparation situation a handle of the duct is located at a preparation height over ground of max. 2,0m. During the preparation situation it is made more comfortable for the user to grab the handle. In contrast thereto in a retracted situation the handle may not be in reach for the user. In particular in a retracted situation the handle of the duct is located at a height of more than the preparation height, in particular more than 2,0m.

In an embodiment during a connection situation the duct is extracted into a connection length. Now the connection length is dependent from the docking event. In particular, the connection length is long enough so that the duct can be attached to the aircraft. Dependent from the docking situation the optimum length is automatically calculated on the basis of the provided information. Extracting the duct merely with the essential required length reduces wear to the duct.

In particular in a first docking event the connection length varies from a connection length (L3) of a second docking event. That means that the length to which the duct is extracted can vary during the several docking events. If a bigger aircraft is to be handled at the gate the required extraction length will likely be greater than in a docking event when a smaller aircraft is to be handled.

In an embodiment the information of the actual docking event is received from or provided by an external data source, in particular by a VDGS system and/or a flight database, in particular the information of the actual docking event comprises an information related type to the aircraft type. The external data source may be outside of the device and/or outside of the passenger boarding bridge.

The invention refers also to a passenger boarding bridge, have a device as describe above. The device may be located on an underside of a tunnel of the passenger boarding bridge. The passenger boarding bridge can be connected to at least two doors of the aircraft. The actual docking event is characterized by a selection, to which of the at least two doors the passenger boarding bridge is to be connected. Since the bridge can be connected to different doors of the aircraft the information is relevant to which of the doors the PBB will be docked in the actual docking event. Based on this information the operation parameters of the device can be adapted accordingly.

A passenger boarding bridge can comprise more than one, at least two or three of such devices. In this case the plurality of devices constitute a group of devices, in particular one device for providing air, another device for providing energy, in particular electricity. Also at one single stand more than one PBBs may be installed, in particular to be docked to the same aircraft. During a use of the PBBs an information about the docking event may provided; based on the provided information automatically at least one device is selected out of the group of the devices, which is to be used during handling the aircraft. Another one of the devices may be non-selected, which means that this device will not be used in the actual docking event.

In an embodiment the selected device is automatically at least allowed and/or transferred from a retracted situation into a preparation situation and/or into a extracted situation; in another embodiment it is prohibiting that a non-selected device is transferred from out or out of the retracted situation.

The invention is described in more detail with the help of the figures, shown schematically herein:
- fig. 1: shows an inventive device installed at an airport gate in a retracted situation;
- fig. 2: shows the device of figure 1 installed at an airport gate in a preparation situation;
- fig. 3: shows the device of figure 2 in a connection situation;
- fig. 4: shows a table of different values in connection with the invention;
- fig. 5: shows a table for the usages of a plurality of devices at one stand.

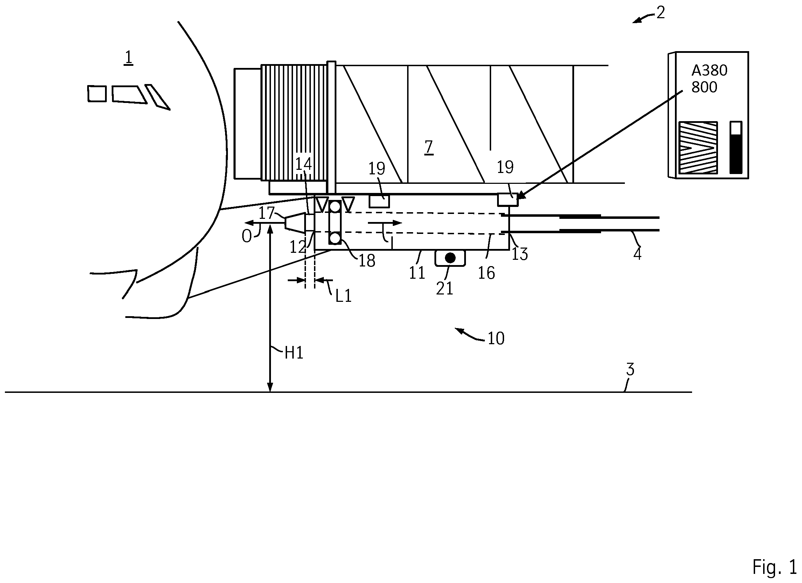

Figures 1 to 3 show an aircraft 1 during a usual situation located at a gate of an airport. The aircraft 1 is standing with its wheels on the airport apron ground 3. A passenger boarding bridge 2 is connected to the aircraft 1.

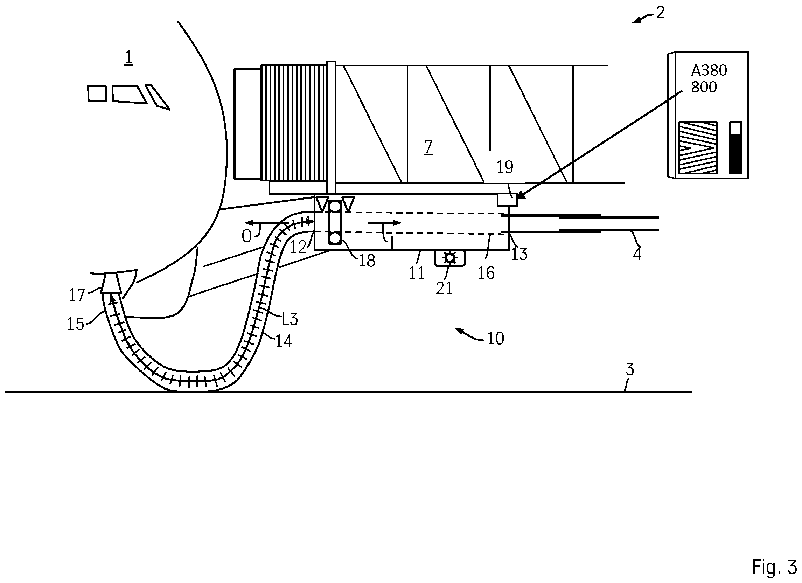

Attached to the passenger boarding bridge 2 is an inventive device 10 adapted to provide conditioned air and/or electricity to the aircraft 1 The device 10 comprises a duct 14, which can be an air hose or an electric conduit. The duct having a first end 15 with a connection member 17, in particular a nozzle or an electric connector. The connection member 17 is adapted to be attached to the aircraft 1 as shown in figure 3. The duct 14 having a second end 16, attached a supply duct or the like, e.g. a supply tube 4.

The device 10 comprises a housing 11 as a storage for accommodating the duct 14 during a retracted situation as shown in figure 1. In another embodiment the storage 11 may be a cable drum or the like. Attached at the storage is 11 a drive 18 is installed for releasing the duct 14 in an outward direction 0 or to pull the duct 14 in an inward direction I. The drive 18 is located in the near of an outlet end 12, so the sections of the hose 14, which are released by the drive 18, are released from the outlet end 12 away from the storage. An inlet end 13 is opposite to the outlet end 12; a supply tube 4 may be attached to the inlet end 13. A control unit 19 is adapted to control the operation of the drive 18. The device is attached to an underside of a tunnel 7 of the PBB. The tunnel 7 can be lifted or lowered so as to be aligned to the height of a door of an aircraft, which leads to a change in the height of the housing 11 of the device in the same manner. In particular when the PBB is docked to larger aircrafts the duct is out of reach for an operator. So before the operator can grab the duct the duct has to be extracted for a certain amount, but not too far because the duct should not touch the ground during the preparation situation.

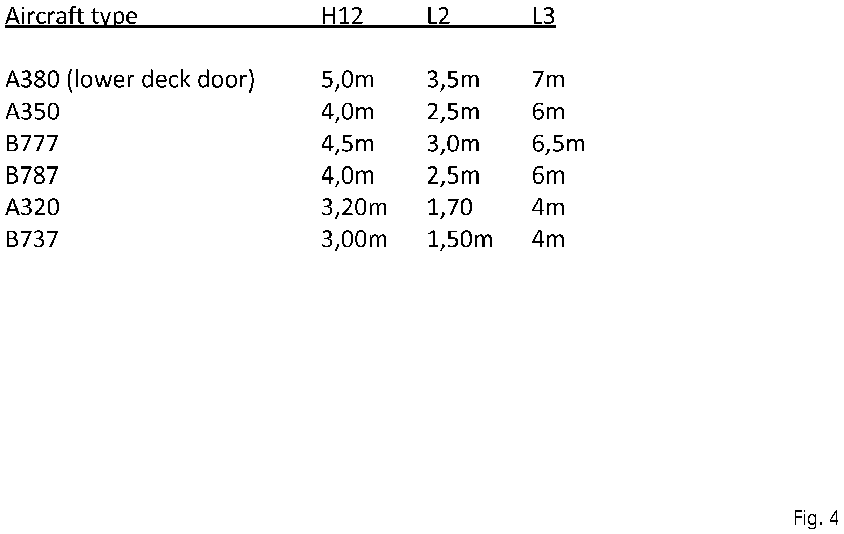

In figure 1 the duct 14 is fully retracted at a first length L1, which is about 0m or several decimeters. The housing outlet 12 is located at a height of H1. It is to be considered that the height of the aircrafts doors over ground varies between different aircraft types. So when the PBB is docked with respect to an aircraft door of different types of aircrafts, the height H1 varies as shown in table of figure 4.

A user HMI 21 is attached to the device 10 for providing an indication to a user whether the device is to be used during the present docking event. The user HMI can be a simple light, an acoustic indicator or any other suitable means.

Figure 3 shows a connection situation. Here the duct is extracted at a connection length L3. Extracted does necessarily mean "fully extracted as far as possible". Rather here the duct is extracted as far as required in the actual docking event, in particular by the type of aircraft which is currently located at the stand. It is apparent, that the location of the connection points at the aircraft with respect to the aircraft door varies between the different aircraft types. Consequently some aircrafts require a larger connection length L3 than other aircrafts.

The control unit determines the connection length L3 based on the docking event and controls the drive to extract the duct according to the determined connection length L3. So in a particular embodiment there is no need for the operator at the ground to control the extraction of the duct into the connection length L3.

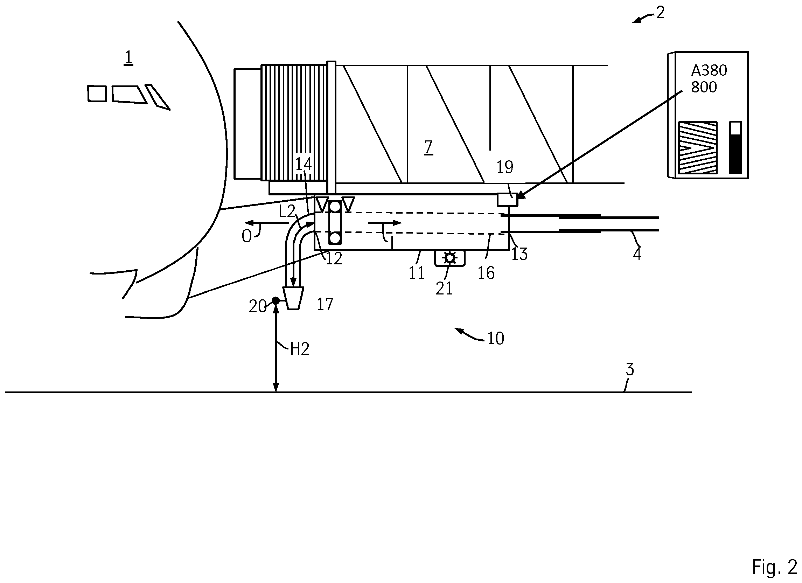

Figure 2 shows the device in a preparation situation. Here the duct 14 is extracted to a preparation length L2. The height H2 of a handle 20, which may be part of the connection member, over ground is H2, wherein H2 is about 1,5m. Now the duct is in a precondition to be grabbed by a gate operator; subsequently the operator connects the grabbed duct to the aircraft as shown in figure 3. In an embodiment it is preferred that during the preparation situation the duct does not touch the ground. The control unit determines the preparation length L2 based on the docking event and controls the drive to extract the duct according to the determined preparation length L2. So there is no need for the operator at the ground to control the extraction of the duct into the preparation length.

It is apparent, that depending on the size of the aircraft the PBB and consequently the device and thus the outlet end 12 is located at different height positions H1 over ground 3. Consequently the preparation length L2, at which the duct can comfortably be grabbed by the operator differs for different types of aircrafts.

For operating and extracting the hose to the respective lengths L2 or L3 aircraft related information is required. VDGS (e.g. disclosed in EP 2 660 152 A2), to which the control unit 19 of the device is connected, can provide data of the aircraft type, which located at the stand. The control unit may have access to a database which comprises data as shown in figure 4. By providing this amount of data the control unit 19 is set into a condition to extract the duct in the preparation situation and the connection situation as described.

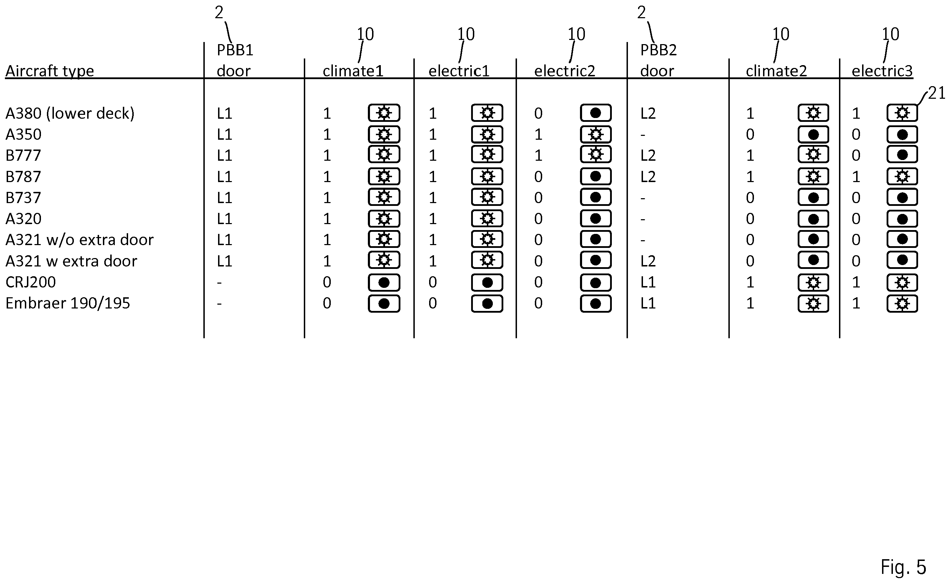

With the help of figure 5 a certain use case of the present invention is explained. Some airport stands are provided with more than one passenger boarding bridge (PBB). An exemplary stand is provided with a first PBB1 and a second PBB2. Here the first PBB1 is provided with one inventive device 10 for providing air to the aircraft (climate1) and with two inventive devices 10 for providing electricity to the aircraft (electric1, electric2).

Depending on the type of aircraft the utilization of the PBBs and the devices 10 are predefined by a dataset, which is shown in figure 5. Here "1" means, that the related device is to be used in the docking event, "0" means, that the related devices will not be used in the docking event.

E.g. if an Airbus A380 is arriving at the stand, the first PBB1 is docked to the first left door L1 (counted from the front of the aircraft) and the second PBB2 is docked to the second left door L2. The devices 10 "climate1", "climate 2", electric1, and electric 2 are to be connected to the aircraft. The device "electric 2 will not be used.

E.g. if a regional jet like the Bombardier CRJ200 or the Embraer 190 is arriving at the stand, merely the PBB 2 used for docking. Here the devices climate 2 and electric 2 are to be connected to the aircraft.

The user HMI 21 is also visible in the table. In case the device is to be used the light is on; otherwise the light is off.

### Reference signs list

- 1: aircraft
- 2: passenger boarding bridge
- 3: apron ground
- 4: supply tube
- 5: aircraft type signal
- 6: VDGS
- 7: tunnel
- 10: device11
- 11: storage, e.g. a housing, a cable drum
- 12: outlet end
- 13: inlet end
- 14: duct
- 15: first end (aircraft side) of duct
- 16: second end (gate side) of duct
- 17: connection member (nozzle or electric connector)
- 18: drive
- 19: control unit
- 20: handle
- 21: user interface

- O: outward direction
- I: Inward direction
- L3: third length, extracted length (aircraft depending)
- L2: second length, preparation length (aircraft depending)
- L1: first length, retracted length
- H2: height of connection member at preparation situation
- H1: heigth of connection member at retracted situation

## Claims

1. A device (10) adapted to provide a fluid or energy to an aircraft (1), comprising a storage (11),
a duct (14) at least partially accommodated at said storage (11), the duct (14) having a first end (15) to be attached to the aircraft (1),
a drive (18) adapted for extracting the duct (14) from the storage (11) and retracting the duct (14) to the storage (11),
a control unit (19) for controlling the functionality of the drive (18),
**characterized in**
**that** the control unit (19) is adapted to control the functionality of the device automatically in dependency of the actual docking event.

2. The device (10) according to the preceding claim,
**characterized in**
**that** the actual docking event is **characterized by** a type of the aircraft, which is to be provided with fluid or energy by the device.

3. The device (10) according to any of the preceding claims,
**characterized in**
**that** the actual docking event is **characterized by** a height (H1) which is in a known relation to the height of a door of an aircraft (1) to which a passenger boarding bridge (2) is to be docked to.

4. The device (10) according to any of the preceding claims,
**characterized in**
**that** the control unit is adapted so as to control the drive in a manner that in a preparation situation the duct is extracted into a preparation length (L2), wherein the preparation length (L2) is dependent from the docking event,
in particular that during the preparation situation a handle (20) of the duct (14) is located at a preparation height (H2) over ground of max. 2,0m;
in particular that in a retracted situation the handle (20) of the duct (14) is located at a height (H1) of more than the preparation height (H2), in particular more than 2,0m.

5. The device (10) according to any of the preceding claims,
**characterized in**
**that** the control unit is adapted so as to control the drive in a manner that in a connection situation the duct is extracted into a connection length (L3), wherein the connection length (L3) is dependent from the docking event,
in particular that the connection length is long enough so that the duct can be attached to the aircraft.

6. The device (10) according to the preceding claim,
**characterized in**
**that** in a first docking event the connection length (L3) varies from a connection length (L3) of a second docking event;
in particular wherein the first and second docking events differ to each other by the type of aircraft to which the duct is to be connected to.

7. The device (10) according to any of the preceding claims,
**characterized in**
**that** the control unit is adapted to receive information of the actual docking event from an external data source, in particular by a VDGS system and/or a flight database, in particular the information of the actual docking event comprises an information related to the aircraft type.

8. Passenger boarding bridge, comprising a device according to any of the preceding claims, in particular the device is located on an underside of a tunnel of the passenger boarding bridge,
the passenger boarding bridge can be connected to at least two doors of the aircraft, wherein the actual docking event is **characterized by** a selection, to which of the at least two doors the passenger boarding bridge is to be connected.

9. Passenger boarding bridge according to the preceding claim, wherein the device (10) is attached to the tunnel (7) at a fixed height relation, in particular at the underside of the tunnel (7).

10. Method of handling an aircraft at an airport stand,
wherein during handling a group of devices (10) is used, wherein the group of devices (10) having at least two devices (10) according to any of the preceding claims,
in particular the devices are located at the same airport stand,
wherein an information about the docking event is provided and
based on the provided information it is automatically selected at least one device (10) out of the group of the devices (10), which is to be used during handling the aircraft within the docking event.

11. Method according to the preceding claim,
comprising the step of
providing a signal indicative of the selection of devices to a user via a user interface (21).

12. Method according to any of claims 10 or 11,
comprising the step of
at least allowing and/or automatically transferring the selected device (10) from a retracted situation into a preparation situation and/or into a extracted situation;
and/or
prohibiting a non-selected device (10) from transferring out of the retracted situation.
